# EUROPÄISCHE PATENTSCHRIFT

(11) **EP 1 577 863 B1**
(45) Veröffentlichungstag und Bekanntmachung des Hinweises auf die Patenterteilung: **12.10.2011**
(21) Anmeldenummer: 05090034.9
(22) Anmeldetag: 18.02.2005
(51) Int. Cl.: G09F 9/305, G08G 1/095

(54) **Lichtleiteranzeiger**
Display device with optical fibers
Dispositif d'affichage à fibres optiques

(30) Priorität: 18.03.2004 DE 102004014417
(43) Veröffentlichungstag der Anmeldung: 21.09.2005
(73) Patentinhaber: SIEMENS AKTIENGESELLSCHAFT, 80333 München (DE)
(72) Erfinder: Liebscher, Jörg, 38302 Wolfenbüttel (DE); Zimmermann, Dirk, 13053 Berlin (DE)

(56) Entgegenhaltungen:
- DE-A1- 2 613 912
- DE-A1- 4 003 846
- DE-A1- 19 953 542

## Beschreibung

Die Erfindung betrifft einen Lichtleiteranzeiger gemäß dem Oberbegriff des Anspruchs 1.

Die nachstehenden Erläuterungen beziehen sich im Wesentlichen auf Lichtleiteranzeiger zur Signalisierung von Symbolen, Ziffern, Buchstaben und beliebigen anderen Zeichen bei schienengebundenen Verkehrswegen, ohne dass der beanspruchte erfinderische Gegenstand auf diese Anwendung beschränkt sein soll.

Bei bekannten Lichtleiteranzeigern wird als Leuchtmittel überwiegend eine Glühlampe verwendet, deren Licht mittels eines Hohlspiegels in eine definierte Brennfläche gerichtet wird. In dieser Brennfläche befindet sich die Lichteintrittsfläche eines Lichtleiterbündels. Um die Lichtverluste in Grenzen zu halten, muss diese Lichteintrittsfläche zur Gänze und möglichst gleichmäßig beleuchtet werden. Außerdem muss die Lichteintrittsfläche mittels Schleifen und Polieren aufwändig präpariert werden.

Mit der Einführung neuartiger Leuchtmittel, insbesondere auf der Basis von LED (lichtimitierende Dioden) ergibt sich zunehmend die Notwendigkeit, Glühlampen durch moderndere Leuchtmittel zu ersetzen. Problematisch dabei ist vor allem die optische Anpassung, da die vorhandene Lichtleiterbaugruppe auf die spezielle Leuchtstärke und Abstrahlcharakteristik der Glühlampe in Verbindung mit einem Optikelement, insbesondere einem Hohlspiegel, abgestimmt ist. Moderne Leuchtmittel besitzen eine gänzlich andere Leuchtstärke und Abstrahlcharakteristik, so dass der bloße Ersatz der Glühlampe, beispielsweise durch eine LED-Anordnung, mit Lichtverlusten an der Lichteintrittsfläche des Lichtleiterbündels verbunden ist. Um gleichwertige optische Eigenschaften des Lichtleiteranzeigers zu gewährleisten, muss daher in der Regel das komplette optische System samt Lichtleiterbaugruppe neu entwickelt werden.

Aus der DE 26 13 912 ist eine optische Anordnung mit einer Glühlampe und einem Lichtleiterbündel zur Ausleuchtung eines Straßenverkehrssignals bekannt.

Eine Halterung für ein Lichtleiterbündel mit verlustarmer Lichtübertragung ist in der DE 40 03 846 A1 beschrieben.

Der Erfindung liegt deshalb die Aufgabe zugrunde, einen Lichtleiteranzeiger der gattungsgemäßen Art anzugeben, der für Leuchtmittel unterschiedlicher Art die Weiterverwendung der vorhandenen Lichtleiterbaugruppe ermöglicht.

Erfindungsgemäß wird die Aufgabe mit den kennzeichnenden Merkmalen des Anspruchs 1 gelöst. Die Umrüstung von Glühlampen-Lichtleiteranzeigern in LED-Lichtleiteranzeigern ist auf diese Weise besonders einfach, wobei die Anpassung quasi nur von der Beleuchtungsseite her vorgenommen wird und die Lichtleiterbaugruppe weiterverwendet werden kann. Bekannte LED-Module bestehen im Wesentlichen aus einer rasterartigen Anordnung mehrerer LED, welche jeweils mit einem Reflektor ausgestattet sind, wobei ein lichtbündelndes optisches Element gemäß Anspruch 3 und gegebenenfalls eine Frontscheibe vorgesehen sind. Erfindungsgemäß wird somit lediglich eine optische Anpassung an die bewährte Lichtleiterbaugruppe vorgenommen. Vorzugsweise sind die einzelnen LED des LED-Moduls derart verschaltet, dass ein Sicherheitskonzept bezüglich LED-Ausfall realisierbar ist. Dabei ist das Lichtleiterbündel in einer Führungshülse angeordnet, welche in einer Aufnahme eines Gehäuses für das LED-Modul einschiebbar und justierbar ist. Auf diese Weise kann die optimale Lichtverteilung und Helligkeit auf einem Display des Lichtleiteranzeigers eingestellt werden.

Als moderne Leuchtmittel, die für den Glühlampenersatz infrage kommen, können gemäß Anspruch 3 auch flächige Leuchtelemente, beispielsweise auf der Basis organischer LED, vorgesehen sein. Die Leuchtfläche des flächigen Leuchtelementes kann dann an die Lichteintrittsfläche des Lichtleiterbündels unmittelbar angepasst werden. Denkbar ist aber auch die Zwischenschaltung einer, insbesondere bündelnden, Optik.

Nahfolgend wird die Erfindung anhand figürlicher Darstellungen näher erläutert. Es zeigen:
Figur 1 den prinzipiellen Aufbau eines herkömmlichen Lichtleiteranzeigers und
Figur 2 einen Lichtleiteranzeiger mit LED-Modul.

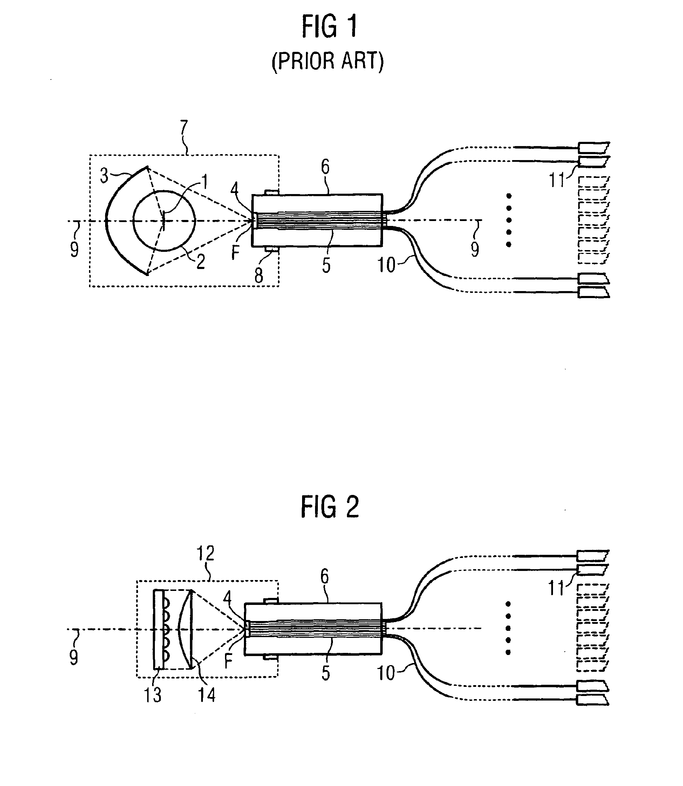

In Figur 1 ist das Funktionsprinzip eines Glühlampen-Lichtleiteranzeigers nach dem Stand der Technik veranschaulicht.

Lichtleiteranzeiger dienen in der Eisenbahnsignaltechnik zur Signalisierung von Symbolen, Ziffern, Buchstaben und beliebigen anderen Zeichen. Das von einer Glühwendel 1 der Glühlampe 2 emittierte Licht wird mit Hilfe eines Hohlspiegels 3 in einem Brennpunkt bzw. einer Brennfläche F fokussiert. Im Bereich der Brennfläche F ist die Lichteintrittsfläche 4 eines Lichtleiterbündels 5 angeordnet, wobei die Lichteintrittsfläche 4 möglichst vollständig und gleichmäßig beleuchtet wird. Die einzelnen Lichtleiter des Lichtleiterbündels 5 werden geschichtet und in einer Führungshülse 6 verklebt. Um die

Lichtausbeute nicht unnötig zu verringern, wird die Lichteintrittsfläche 4 des Lichtleiterbündels 5 anschließend geschliffen und poliert. Ein Gehäuse 7 für die Glühlampe 2 und den Hohlspiegel 3 ist mit einer Aufnahme 8 für die Führungshülse 6 versehen. Dabei wird eine Justierung angestrebt, bei der die Glühwendel 1, der Hohlspiegel 3 und das Lichtleiter bündel 5 auf der optischen Achse 9 angeordnet sind und das Abbild der Glühwendel 1 die Lichteintrittsfläche 4 des Lichtleiterbündels 5 exakt ausleuchtet. Die Lichtleiter 10 des Lichtleiterbündels 5 sind lichtaustrittsseitig und außerhalb der Führungshülse 6 mit Lichtaustrittslinsen 10 versehen, durch welche mittels nicht dargestellter Steuerelemente ein Display zur Anzeige von Buchstaben, Zahlen und andern Symbolen quasi flächig ausgefüllt wird.

Um diese hochwertige und bewährte Lichtleiterbaugruppe auch für andere Leuchtmittel anstelle der Glühwendel 1 verwenden zu können, ist eine Gehäusebaugruppe 12 mit einem LED-Modul 13 samt vorgeschalteter Sammellinse 14 zur Fokussierung des LED-Lichtes in die Brennebene F vorgesehen, wie aus Figur 2 ersichtlich. Auf diese Weise wird die Lichteintrittsfläche 4 des Lichtleiterbündels 5 quasi mit einem glühwendelartigen Lichtfleck beleuchtet. Die Gehäusebaugruppe 12 umfasst dabei das LED-Modul 13 mit Sammellinse 14 und die Aufnahme 8 für die Führungshülse 6 des Lichtleiterbündels 5 in einer konstruktiven Einheit. Die Aufnahme 8 für die Führungshülse 9 bildet mithin die dem Stand der Technik gemäß Figur 1 entsprechende Befestigungsstelle zwischen der neuen Gehäusebaugruppe 12 und der alten Lichtleiterbaugruppe 5, 6, 10, 11.

Die Erfindung beschränkt sich nicht auf das vorstehend angegebene Ausführungsbeispiel. Vielmehr ist eine Anzahl von Varianten denkbar, welche auch bei grundsätzlich anders gearteter Ausführung von den Merkmalen der Erfindung Gebrauch machen.

## Patentansprüche

1. Lichtleiteranzeiger mit einem Leuchtmittel und einem Optikelement zur Fokussierung des von dem Leuchtmittel abgestrahlten Lichts in eine Brennfläche (F), deren Anordnung, Größe und Geometrie im Wesentlichen mit der Anordnung, Größe und Geometrie einer Lichteintrittsfläche (4) eines Lichtleiterbündels (5) übereinstimmt, insbesondere zur Signalisierung von Symbolen und Zeichen bei schienengebundener. Verkehrswegen,
**dadurch gekennzeichnet,**
**dass** das Leuchtmittel und das Optikelement als LED-Modul (13) ausgebildet sind und
**dass** das Lichtleiterbündel (5) in einer Führungshülse (6) angeordnet ist, wobei ein Gehäuse (12) für das LED-Modul (13) und eine Aufnahme (8) für die Führungshülse (6) eine konstruktive Einheit bilden.

2. Lichtleiteranzeiger nach Anspruch 1,
**dadurch gekennzeichnet,**
**dass** das Optikelement als Sammellinse (14) oder Fresnelplatte ausgebildet ist.

3. Lichtleiteranzeiger nach Anspruch 1,
**dadurch gekennzeichnet,**
**dass** das LED-Modul auf der Basis organischer LED, deren Leuchtfläche mit der Größe und der Geometrie der Brennfläche (F) im Wesentliche übereinstimmt, ausgebildet ist.

## Claims

1. Optical waveguide indicator comprising a luminous means and an optical element for focusing the light emitted by the luminous means into a focal surface (F), the arrangement, size and geometry of which substantially corresponds to the arrangement, size and geometry of a light entrance surface (4) of an optical waveguide bundle (5), in particular for signalling symbols and characters in the case of rail-based traffic routes,
**characterized**
**in that** the luminous means and the optical element are embodied as an LED module (13), and
**in that** the optical waveguide bundle (5) is arranged in a guide sleeve (6), wherein a housing (12) for the LED module (13) and a receptacle (8) for the guide sleeve (6) form a structural unit.

2. Optical waveguide indicator according to Claim 1, **characterized**
**in that** the optical element is embodied as a converging lens (14) or Fresnel plate.

3. Optical waveguide indicator according to Claim 1, **characterized**
**in that** the LED module is embodied on the basis of organic LEDs, the luminous surface of which substantially corresponds to the size and the geometry of the focal surface (F).

## Revendications

1. Dispositif d'affichage à fibres optiques, comprenant un agent lumineux et un élément optique pour la focalisation de la lumière émise par l'agent lumineux sur une surface ( F ) focale, dont l'agencement, la dimension et la géométrie coïncident sensiblement avec l'agencement, la dimension et la géométrie d'une surface (4) d'entrée de la lumière d'un faisceau ( 5 ) de fibres optiques, notamment pour la signalisation de symboles et de signes dans des voies de communication ferroviaires,
**caractérisé**
**en ce que** l'agent lumineux et l'élément optique sont constitués sous la forme de modules LED ( 13 ) et
**en ce que** le faisceau de fibres optiques est disposé dans un manchon ( 6 ) de guidage, un boîtier (12) du module LED ( 13 ) et un logement ( 8 ) du manchon (6) de guidage formant une unité de construction.

2. Dispositif d'affichage à fibres optiques suivant la revendication 1,
**caractérisé**
**en ce que** l'élément optique est constitué sous la forme d'une lentille ( 14 ) convergente ou d'une lentille de Fresnel.

3. Dispositif d'affichage à fibres optiques suivant la revendication 1,
**caractérisé**
**en ce que** le module LED est constitué sur la base d'une LED organique, dont la surface lumineuse coïncide sensiblement avec la dimension et la géométrie de la surface ( F ) focale.
